# EUROPEAN PATENT APPLICATION

(11) **EP 4 769 799 A1**
(43) Date of publication of application: **01.07.2026**
(21) Application number: 25854548.2
(22) Date of filing: 22.07.2025
(51) Int. Cl.: H01M 50/503, H01M 50/502, H01M 50/569, H01M 50/516, H01R 25/14, B23K 26/21, B23K 37/08, H01M 50/591, H01M 50/588, H01M 50/172

(54) **BATTERY ASSEMBLY AND VEHICLE COMPRISING SAME**

(30) Priority: 13.08.2024 KR 20240108389
(71) Applicant: LG Energy Solution, Ltd., Seoul 07335 (KR)
(72) Inventor: JANG, Sung-Hwan, Daejeon 34122 (KR); KIM, Gwan-Woo, Daejeon 34122 (KR); CHOI, Hae-Won, Daejeon 34122 (KR)
(74) Representative: BCKIP Part mbB
(86) International application number: PCT/KR2025/010808
(87) International publication number: WO 2026/038739

(57) **Abstract**

A battery assembly according to the present disclosure comprises a plurality of batteries; a busbar electrically connected to electrode leads of the plurality of batteries; and a busbar frame having a busbar socket into which a portion of the busbar is inserted, the busbar frame being coupled to the busbar and supporting the busbar, and the busbar comprises a body portion to which the electrode leads overlapping each other are coupled; and a plug portion integral with the body portion, extending from the body portion toward the busbar frame, and configured to be inserted into the busbar socket to fix the body portion to the busbar frame.

## Description

This application is based on and claims priority from Korean Patent Application No. 10-2024-0108389, filed on August 13, 2024, with the Korean Intellectual Property Office, the disclosure of which is incorporated herein in its entirety by reference.

### TECHNICAL FIELD

The present disclosure relates to a battery assembly and a vehicle including the same, and more particularly, to a battery assembly having a plurality of rechargeable batteries, and a vehicle including the battery assembly.

### BACKGROUND ART

In general, batteries that can be repeatedly charged and discharged, such as lithium-ion batteries, lithium polymer batteries, nickel cadmium batteries, nickel hydrogen batteries, and nickel zinc batteries, may provide an output voltage of approximately 2.5 V to 4.2 V.

Recently, as these batteries are applied to devices that require high output voltage/current and large charging capacity, such as electric vehicles or ESSs (Energy Storage Systems), battery assemblies such as battery modules or battery packs, which are composed of a plurality of batteries connected in series and/or in parallel, are being widely used.

However, the existing technology has a problem in that the electrode leads of the batteries are connected to different parts of a busbar having a wide plate shape in order to connect a plurality of batteries outputting high current in parallel or to connect the batteries connected in parallel in series with other batteries connected in parallel, so that the current path within the busbar differs for each battery, resulting in a deviation in the current value output for each battery, and as a result, causing a difference in performance or an imbalance in charging capacity between the batteries.

In addition, since the existing technology couples the busbar and the busbar frame that supports the busbar through a separate fastening member and welds the electrode leads of the batteries to different parts of the busbar, not only does it require a lot of time and cost to assemble the battery assembly, but there is also a problem that foreign substances such as spatter generated during the welding process may cause malfunction of the battery assembly, electrical short circuit, fire, etc.

### DISCLOSURE

### Technical Problem

The technical challenge that the present disclosure seeks to address is to provide a battery assembly that is easy to assemble and takes a short time to assemble, while reducing the deviation in current values output for each battery and structurally preventing differences in performance or imbalances in charging capacity between batteries, and a vehicle including such a battery assembly.

### Technical Solution

A battery assembly according to one aspect of the present disclosure comprises a plurality of batteries; a busbar electrically connected to electrode leads of the plurality of batteries; and a busbar frame having a busbar socket into which a portion of the busbar is inserted, the busbar frame being coupled to the busbar and supporting the busbar, wherein the busbar comprises a body portion to which the electrode leads are coupled after being overlapped with each other; and a plug portion integral with the body portion, extending from the body portion toward the busbar frame, and configured to be inserted into the busbar socket to fix the body portion to the busbar frame.

In an embodiment, the body portion may have a band shape or strap shape.

In an embodiment, the busbar socket may include a first socket and a second socket that are positioned spaced apart from each other with the busbar therebetween, and the plug portion may include a first plug and a second plug that are inserted into the first socket and the second socket, respectively.

In an embodiment, the plug portion may have a through hole, the busbar frame may further have a coupling protrusion protruding from an inner surface of the busbar socket, and the coupling protrusion may be configured to be inserted into the through hole of the plug portion when the plug portion is inserted into the busbar socket.

In an embodiment, the battery assembly may further comprise a sensing circuit for sensing voltage of the plurality of batteries; and a connection pin electrically connecting the busbar and the sensing circuit.

In an embodiment, the connection pin may include a first connection portion fixed to an inner surface of the busbar socket so as to make contact with the plug portion inserted into the busbar socket; an extension portion having one end connected to the first connection portion and the other end extending from the inside of the busbar socket to the outside of the busbar socket; and a second connection portion electrically connected to the sensing circuit by extending from the other end of the extension portion.

In an embodiment, the connection pin may be manufactured from a single metal plate.

In an embodiment, the busbar frame and the connection pin may be formed integrally with each other by insert molding.

In an embodiment, the electrode leads of the plurality of batteries may be coupled to the body portion of the busbar by welding, and the busbar frame may further include a pocket provided in a portion of the busbar frame adjacent to the body portion to capture foreign substances generated during the welding process.

In an embodiment, the battery assembly may further comprise a fireproof cover manufactured from a material with a relatively higher melting point than a material forming the busbar frame so as to cover an inner surface of the pocket.

In an embodiment, the plurality of batteries may be arranged side by side with each other, and the electrode leads of batteries that are arranged relatively farther from the busbar among the plurality of batteries may be configured to be longer than the electrode leads of the other batteries that are arranged relatively close to the busbar.

A vehicle according to another aspect of the present disclosure comprises the battery assembly described above.

### Advantageous Effects

According to the present disclosure, electrode leads of a plurality of batteries included in a battery assembly are overlapped and coupled to the same part of a busbar, thereby allowing currents output from each of the plurality of batteries and passing through the busbar to flow through the same path within the busbar, and as a result, reducing the deviation in current values output from each battery and structurally preventing performance differences or imbalances in charging capacity between batteries.

In particular, by inserting the plug portion of the busbar into the busbar socket provided on the busbar frame, the body portion of the busbar is configured to be fixed to the busbar frame, thereby facilitating assembly of the battery assembly and shortening the assembly time.

In addition, in one embodiment, when the plug portion of the busbar is inserted into the busbar socket, the corresponding busbar and the sensing circuit of the battery assembly are configured to be electrically connected without separate wiring work, thereby simplifying the electrical connection structure of the battery assembly, and as a result, further shortening the assembly time of the battery assembly.

In addition, in one embodiment, a pocket configured to capture foreign substances generated during the process of welding the electrode leads to the busbar by overlapping the electrode leads each other is provided in the busbar frame, thereby preventing malfunction of the battery assembly, electrical short circuit, fire, etc. caused by small foreign substances such as spatter.

Furthermore, a person having ordinary skill in the art to which the present disclosure belongs will be able to clearly understand from the following description that various embodiments according to the present disclosure can solve various technical problems not mentioned above.

### DESCRIPTION OF DRAWINGS

FIG. 1 is a perspective view showing a battery assembly according to an embodiment of the present disclosure.
FIG. 2 is a perspective view showing a busbar of the battery assembly illustrated in FIG. 1.
FIG. 3 is a drawing showing a portion of a busbar frame illustrated in area A1 of FIG. 1.
FIG. 4 is a drawing showing the busbar before it is coupled to the busbar frame.
FIG. 5 is a drawing showing the busbar coupled to the busbar frame.
FIG. 6 is a drawing showing electrode leads of the batteries before they are welded to the busbar.
FIG. 7 is a drawing showing the electrode leads of the batteries welded to the busbar.
FIG. 8 is a cross-sectional view taken along line S1-S1' of FIG. 7.
FIG. 9 is a drawing showing a vehicle according to an embodiment of the present disclosure.

### BEST MODE

Hereinafter, in order to clarify the solution corresponding to the technical challenge of the present disclosure, embodiments according to the present disclosure will be described in detail with reference to the attached drawings. However, when explaining the present disclosure, if a description of a related publicly known technology obscures the gist of the present disclosure, the description thereof may be omitted.

In addition, the terms used in this specification are terms defined in consideration of the functions in the present disclosure, and these may vary depending on the intention or custom of the designer, manufacturer, etc. Therefore, the definitions of the terms described below should be made based on the contents throughout this specification.

In addition, even without separate explanation, it is noted in advance that various embodiments related to different components of the present disclosure may be combined with each other in some cases, as long as they do not technically conflict.

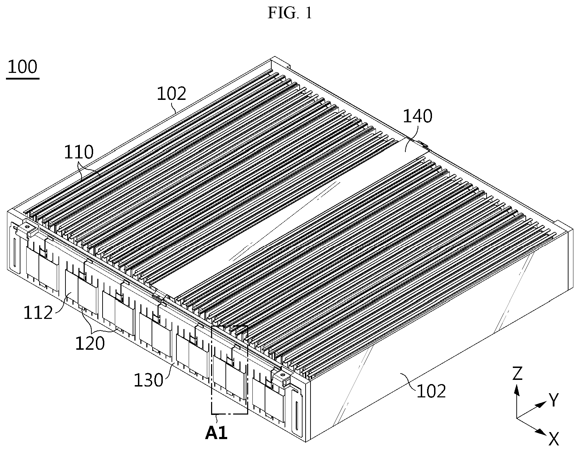

FIG. 1 is a perspective view showing a battery assembly according to an embodiment of the present disclosure.

As illustrated in FIG. 1, the battery assembly 100 according to an embodiment of the present disclosure includes a plurality of batteries 110, a busbar 120, and a busbar frame 130.

The plurality of batteries 110 correspond to secondary batteries capable of repeated charging and discharging, and may be stacked and fixed side by side in one direction (X-axis direction). In this case, the battery assembly 100 may further include a pair of end plates 102 that support the plurality of batteries 110 so that the stacked state of the plurality of batteries 110 is maintained.

In addition, each battery 110 included in the battery assembly 100 may be implemented as a battery of various types. For example, each battery 110 may be implemented as a pouch-type battery or a square-type battery.

The busbar 120 is configured to be electrically connected to the electrode leads 112 of a plurality of batteries 110. The busbar 120 may be manufactured from a durable and conductive metal material.

The busbar frame 130 is configured to be coupled with the busbar 120 and support the busbar 120. The busbar frame 130 may be configured with a material having electrical insulation and fire resistance. For example, the busbar frame 130 may be manufactured with a material including one or two or more of polyimide, aromatic polyamide, polyphenylene sulfide, polyether ether ketone, fluoropolymer, and ceramic.

In one embodiment, the battery assembly 100 may further include a sensing circuit 140. In this case, the sensing circuit 140 may be configured to sense the voltage of the battery 110 connected to the busbar 120. The sensing circuit 140 may be implemented as a flexible printed circuit board (FPCB).

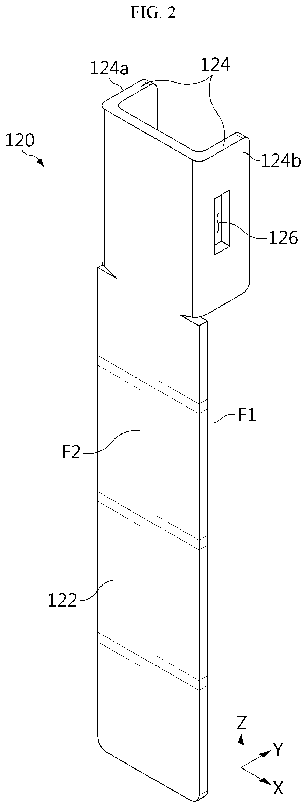

FIG. 2 is a perspective view showing a busbar 120 of the battery assembly illustrated in FIG. 1.

As illustrated in FIG. 2, the busbar 120 may include a body portion 122 and a plug portion 124.

The body portion 122 has a first side F1 facing the busbar frame 130 and a second side F2 located opposite the first side F1, and is configured such that the electrode leads of the batteries are connected to the second side F2 after being overlapped with each other. This body portion 122 may have a band shape or a strap shape.

The plug portion 124 is integrally formed with the body portion 122 and extends from the body portion 122 toward the busbar frame 130 described above. The plug portion 124 is configured to be inserted into and coupled to a busbar socket provided in the busbar frame 130, thereby fixing the body portion 122 to the busbar frame 130. To this end, the plug portion 124 may include a first plug 124a and a second plug 124b that extend in parallel and spaced apart from each other.

Such busbar 120 may be manufactured from a single sheet of metal.

As will be described further below, the plug portion 124 of the busbar 120 may be provided with a through hole 126. This through hole 126 may be used for the coupling between the plug portion 124 and the busbar frame 130.

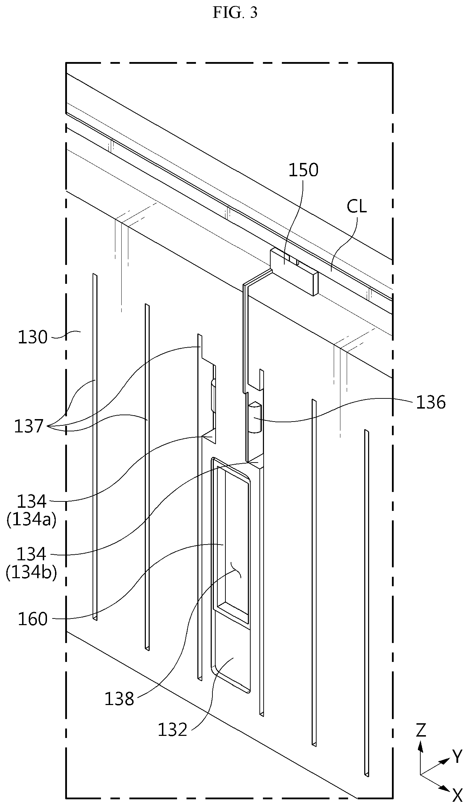

FIG. 3 is a drawing showing a portion of a busbar frame 130 illustrated in area A1 of FIG. 1.

As illustrated in FIG. 3, the busbar frame 130 has a support portion 132 and a busbar socket 134.

The support portion 132 is configured to contact the busbar 120 and support the busbar 120. In particular, the support portion 132 may be configured to contact the body portion 122 of the above-described busbar 120.

The busbar socket 134 is configured so that a portion of the busbar 120, i.e., the above-described plug portion 124 of the busbar 120, is inserted and coupled.

In one embodiment, the busbar socket 134 may include a first socket 134a and a second socket 134b that are positioned spaced apart from each other with the busbar 120 therebetween. In this case, the first plug (124a in FIG. 2) of the plug portion 124 may be inserted into the first socket 134a, and the second plug (124b in FIG. 2) of the plug portion 124 may be inserted into the second socket 134b.

Meanwhile, as described with reference to FIG. 2, the plug portion 124 of the busbar 120 may be provided with a through hole 126. In this case, the busbar frame 130 may be provided with a coupling protrusion 136 protruding from the inner surface of the busbar socket 134. This coupling protrusion 136 may be configured to be inserted into the through hole 126 of the plug portion 124 when the plug portion 124 of the busbar 120 is inserted into the busbar socket 134. For example, the plug portion 124 of the busbar 120 and the coupling protrusion 136 may be configured to be mutually coupled in a snap-fit manner.

In addition, the busbar frame 130 may have a plurality of slots 137 provided on both sides of the support portion 132 centered on the support portion 132. The electrode lead of the battery connected to the busbar 120 coupled to the busbar frame 130 may extend toward the corresponding busbar 120 through the slot 137 of the busbar frame 130.

In one embodiment, the battery assembly 100 may include a connection pin 150. The connection pin 150 may be configured to electrically connect the busbar 120 coupled to the busbar socket 134 with the sensing circuit 140 described with reference to FIG. 1. In this case, the connection pin 150 may be electrically connected to the sensing circuit 140 via a conductive line CL. For example, the conductive line CL may be implemented as a flat flexible cable (FFC) or a conductive pattern.

In addition, in one embodiment, the busbar frame 130 may have a pocket 138 provided in a portion of the busbar frame 130 adjacent to the body portion 122 of the busbar 120. The pocket 138 may be configured to capture foreign substances such as spatter generated during the process of laser welding the electrode leads of the batteries to the body portion 122 of the busbar 120. To this end, the pocket 138 may have a capture space that is concavely formed in a direction away from the busbar 120 (Y-axis direction).

In addition, in one embodiment, the battery assembly 100 may further include a fireproof cover 160 covering the inner surface of the pocket 138. The fireproof cover 160 may be manufactured from a material having a relatively higher melting point than the material forming the busbar frame 130. For example, the fireproof cover 160 may be manufactured from a material including ceramic or a material including stainless steel.

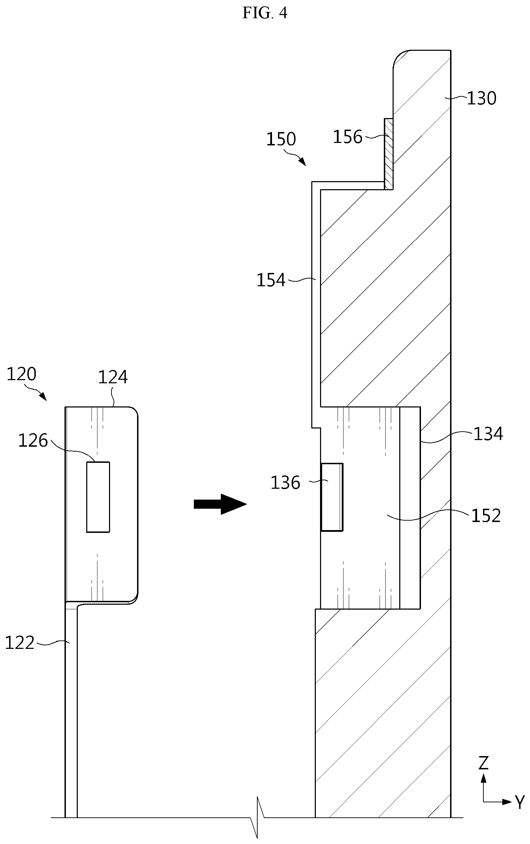

FIG. 4 is a drawing showing the busbar 120 before it is coupled to the busbar frame 130.

As illustrated in FIG. 4, the connection pin 150 may include a first connection portion 152, an extension portion 154, and a second connection portion 156.

In this case, the first connection portion 152 is fixed to the inner surface of the busbar socket 134 so as to come into contact with the plug portion 124 of the busbar 120 inserted into the busbar socket 134.

The extension portion 154 has one end connected to the first connection portion 152, and the other end extending from the inside of the busbar socket 134 to the outside of the busbar socket 134.

The second connection portion 156 is electrically connected to the sensing circuit 140 by extending from the other end of the extension portion 154.

In one embodiment, the connection pin 150 may be manufactured from a single metal plate. Additionally, the busbar frame 130 and the connection pin 150 may be formed integrally with each other by insert molding.

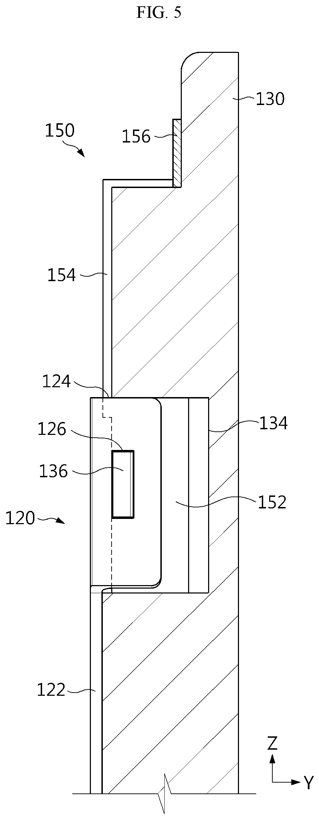

FIG. 5 is a drawing showing the busbar 120 coupled to the busbar frame 130.

As shown in FIG. 5, when the plug portion 124 of the busbar 120 is inserted into the busbar socket 134 of the busbar frame 130, the coupling protrusion 136 of the busbar frame 130 may be inserted into the through hole 126 of the plug portion 124 and coupled.

In addition, when the plug portion 124 of the busbar 120 is inserted into the busbar socket 134 of the busbar frame 130, the plug portion 124 comes into contact with the first connection portion 152 of the connection pin 150. As a result, without a separate wiring work, the busbar 120 may be electrically connected to the sensing circuit 140 described above through the first connection portion 152, the extension portion 154, and the second connection portion 156 of the connection pin 150.

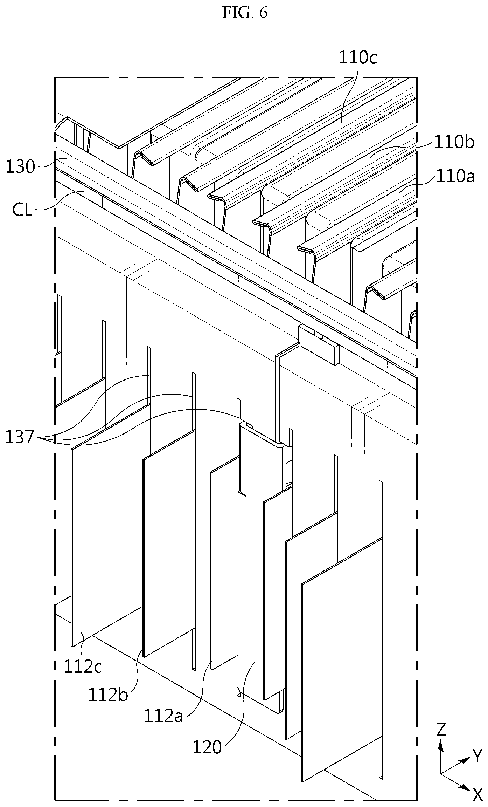

FIG. 6 is a drawing showing electrode leads 112a, 112b, 112c of the batteries 110a, 110b, 110c before they are welded to the busbar 120.

As illustrated in FIG. 6, batteries 110a, 110b, 110c connected to the busbar 120 may be arranged in parallel with each other. In addition, the electrode leads 112a, 112b, 112c of the batteries 110a, 110b, 110c may extend to the front side of the busbar frame 130 to which the busbar 120 is coupled, respectively, through the slots 137 of the busbar frame 130.

The distance between the busbar 120 and each electrode lead 112a, 112b, 112c varies depending on the battery. Therefore, among the batteries 110a, 110b, 110c, the electrode lead 112c of a battery 110c, which is positioned relatively farther away from the busbar 120, may be configured to be longer than the electrode leads 112a, 112b of the other batteries 110a, 110b, which are positioned relatively closer to the busbar 120.

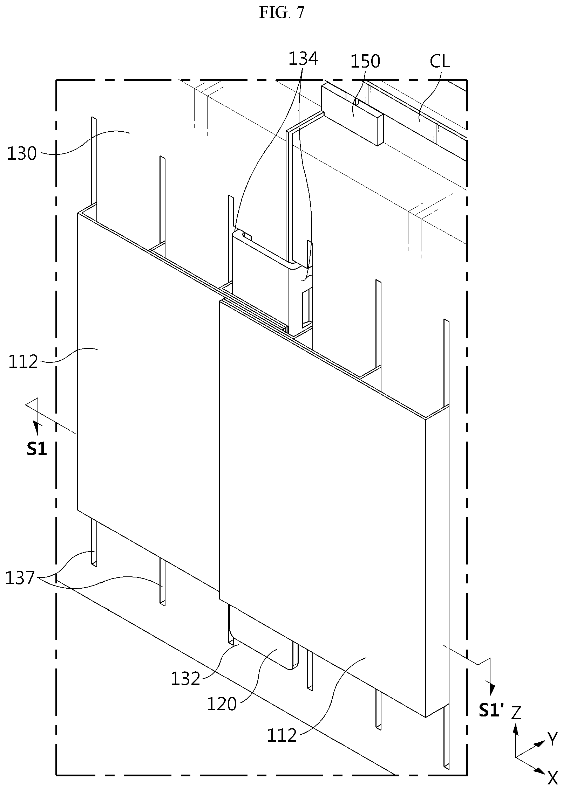

FIG. 7 is a drawing showing the electrode leads of the batteries welded to the busbar.

As shown in FIG. 7, the electrode leads 112 of the batteries that pass through the slots 137 of the busbar frame 130 may be bent toward the busbar 120 that is coupled to the support portion 132 of the busbar frame 130, and then mutually overlapped and coupled to the same portion of the busbar 120.

Therefore, the sensing circuit 140 described above is electrically connected to the corresponding batteries through the connection pin 150 and the busbar 120, and may sense the voltage of the corresponding batteries.

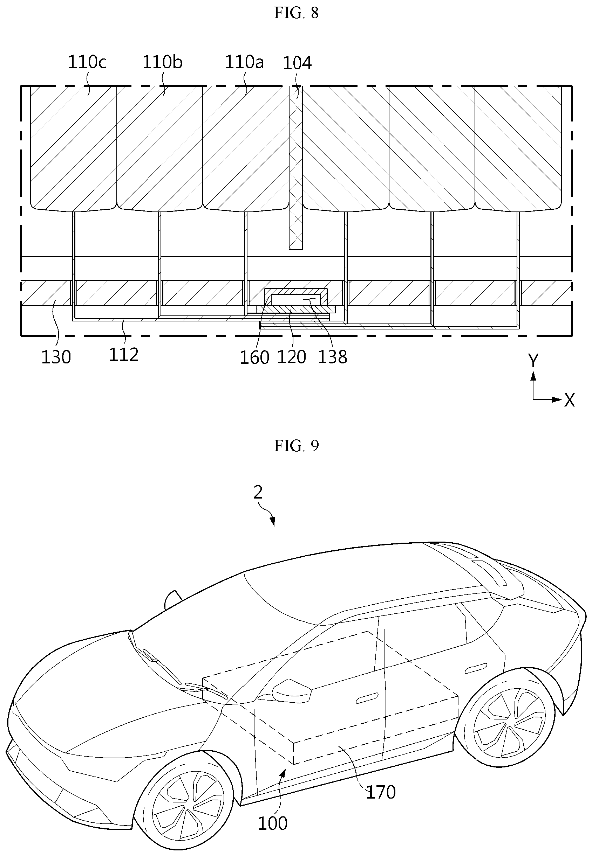

FIG. 8 is a cross-sectional view taken along line S1-S1' of FIG. 7.

As illustrated in FIG. 8, the electrode leads 112 of the batteries 110a, 110b, 110c, which are electrically connected to the busbar 120, may be simultaneously coupled to the body portion 122 of the busbar 120 by laser welding. During this laser welding process, foreign substances such as spatter may also be generated in the rear direction (Y-axis direction) of the busbar 120, depending on the intensity of the laser used to weld the electrode leads 112a, 112b, 112c.

The pocket 138 of the busbar frame 130 described above is provided at a position adjacent to the body portion 122 of the busbar 120, and may capture foreign substances generated as described above.

In addition, the fireproof cover 160, which is manufactured from a material having a relatively higher melting point than the material forming the busbar frame 130, covers the inner surface of the pocket 138, thereby preventing melting or damage to the busbar frame 130 caused by high-temperature foreign substances generated during laser welding.

According to an embodiment, an elastic insulating pad 104 may be interposed between the mutually stacked batteries of the battery assembly 100. The insulating pad 104 may be made of a material including silicone.

FIG. 9 is a drawing showing a vehicle according to an embodiment of the present disclosure.

As illustrated in FIG. 9, the vehicle 2 according to an embodiment of the present disclosure may include the battery assembly 100 according to various embodiments described above. According to an embodiment, the vehicle 2 may include two or more battery assemblies 100 described above.

In this case, the battery assembly 100 may further include a case 170 that accommodates the plurality of batteries 110, the busbar frame 130 to which the busbar 120 is coupled, and the sensing circuit 140.

In addition, the battery assembly 100 may further include a BMS (Battery Management System) (not shown) that controls the charging and discharging operations of the plurality of batteries 110 or monitors the SOC (State Of Charge), SOH (State Of Health), etc. Such a BMS may be accommodated in the case 170.

This battery assembly 100 may provide electrical energy required for various operations of the vehicle 2.

For reference, the battery assembly 100 according to the present disclosure may be applied to various electrical devices or electrical systems other than vehicles, and may also be applied to the ESS (Energy Storage System).

As described above, according to the present disclosure, electrode leads of a plurality of batteries included in a battery assembly are overlapped and coupled to the same part of a busbar, thereby allowing currents output from each of the plurality of batteries and passing through the busbar to flow through the same path within the busbar, and as a result, reducing the deviation in current values output from each battery and structurally preventing performance differences or imbalances in charging capacity between batteries.

In particular, by inserting the plug portion of the busbar into the busbar socket provided on the busbar frame, the body portion of the busbar is configured to be fixed to the busbar frame, thereby facilitating assembly of the battery assembly and shortening the assembly time.

In addition, in one embodiment, when the plug portion of the busbar is inserted into the busbar socket, the corresponding busbar and the sensing circuit of the battery assembly are configured to be electrically connected without separate wiring work, thereby simplifying the electrical connection structure of the battery assembly, and as a result, further shortening the assembly time of the battery assembly.

In addition, in one embodiment, a pocket configured to capture foreign substances generated during the process of welding the electrode leads to the busbar by overlapping the electrode leads each other is provided in the busbar frame, thereby preventing malfunction of the battery assembly, electrical short circuit, fire, etc. caused by small foreign substances such as spatter.

Furthermore, the embodiments according to the present disclosure may solve various technical problems other than those mentioned in this specification in the corresponding technical field as well as in related technical fields.

The present disclosure has been described with reference to specific embodiments. However, those skilled in the art will clearly understand that various modified embodiments can be implemented within the technical scope of the present disclosure. Therefore, the embodiments disclosed above should be considered from an illustrative rather than a restrictive perspective. In other words, the true technical scope of the present disclosure is indicated by the claims, and all differences within the scope equivalent thereto should be interpreted as being included in the present disclosure.

### [Explanation of reference signs]

100: battery assembly
110: battery
120: busbar
122: body portion
124: plug portion
126: through hole
130: busbar frame
132: support portion
134: busbar socket
136: coupling protrusion
138: pocket
140: sensing circuit
150: connection pin
160: fireproof cover

## Claims

1. A battery assembly, comprising:
a plurality of batteries;
a busbar electrically connected to electrode leads of the plurality of batteries; and
a busbar frame having a busbar socket into which a portion of the busbar is inserted, the busbar frame being coupled to the busbar and supporting the busbar,
wherein the busbar comprises:
a body portion to which the electrode leads are coupled after being overlapped with each other; and
a plug portion integral with the body portion, extending from the body portion toward the busbar frame, and configured to be inserted into the busbar socket to fix the body portion to the busbar frame.

2. The battery assembly according to claim 1,
wherein the body portion has a band shape or strap shape.

3. The battery assembly according to claim 1,
wherein the busbar socket includes a first socket and a second socket that are positioned spaced apart from each other with the busbar therebetween, and
wherein the plug portion includes a first plug and a second plug that are inserted into the first socket and the second socket, respectively.

4. The battery assembly according to claim 1,
wherein the plug portion has a through hole,
wherein the busbar frame further has a coupling protrusion protruding from an inner surface of the busbar socket, and
wherein the coupling protrusion is configured to be inserted into the through hole of the plug portion when the plug portion is inserted into the busbar socket.

5. The battery assembly according to claim 1, further comprising:
a sensing circuit for sensing voltage of the plurality of batteries; and
a connection pin electrically connecting the busbar and the sensing circuit.

6. The battery assembly according to claim 5,
wherein the connection pin includes:
a first connection portion fixed to an inner surface of the busbar socket so as to make contact with the plug portion inserted into the busbar socket;
an extension portion having one end connected to the first connection portion and the other end extending from the inside of the busbar socket to the outside of the busbar socket; and
a second connection portion electrically connected to the sensing circuit by extending from the other end of the extension portion.

7. The battery assembly according to claim 5,
wherein the connection pin is manufactured from a single metal plate.

8. The battery assembly according to claim 5,
wherein the busbar frame and the connection pin are formed integrally with each other by insert molding.

9. The battery assembly according to claim 1,
wherein the electrode leads of the plurality of batteries are coupled to the body portion of the busbar by welding, and
wherein the busbar frame further includes a pocket provided in a portion of the busbar frame adjacent to the body portion to capture foreign substances generated during the welding process.

10. The battery assembly according to claim 9, further comprising:
a fireproof cover manufactured from a material with a relatively higher melting point than a material forming the busbar frame so as to cover an inner surface of the pocket.

11. The battery assembly according to claim 1,
wherein the plurality of batteries are arranged side by side, and
wherein the electrode leads of batteries that are arranged relatively farther from the busbar among the plurality of batteries are configured to be longer than the electrode leads of the other batteries that are arranged relatively close to the busbar.

12. A vehicle, comprising the battery assembly according to any one of claims 1 to 11.
